Europäisches Patentamt

European Patent Office

Office européen des brevets

(19)

(11) Veröffentlichungsnummer : **0 109 555**
**B1**

(12) # EUROPÄISCHE PATENTSCHRIFT

(45) Veröffentlichungstag der Patentschrift :
02.12.87

(21) Anmeldenummer : 83110461.7

(22) Anmeldetag : 20.10.83

(51) Int. Cl.⁴ : **H 02 B   1/08**

(54) **Elektrischer Schaltschrank.**

(30) Priorität : 22.11.82 DE 3243060

(43) Veröffentlichungstag der Anmeldung :
30.05.84 Patentblatt 84/22

(45) Bekanntmachung des Hinweises auf die Patenterteilung : 02.12.87 Patentblatt 87/49

(84) Benannte Vertragsstaaten :
AT CH DE LI NL SE

(56) Entgegenhaltungen :
DE-A- 2 515 152

(73) Patentinhaber : BBC Aktiengesellschaft Brown,
Boveri & Cie.
Haselstrasse
CH-5401 Baden (CH)

(72) Erfinder : Grass, Hermann
Grenzhofer Strasse 76
D-6803 Edingen (DE)
Erfinder : Florig, Hans-Friedrich
Am Binsenberg 6
D-6934 Birkenau (DE)

(74) Vertreter : Kempe, Wolfgang, Dr. et al
c/o BROWN, BOVERI & CIE AG ZPT Postfach 351
D-6800 Mannheim 31 (DE)

## Beschreibung

Die Erfindung betrifft einen elektrischen Schaltschrank mit mindestens einem mit einem durch ein Blechteil gebildeten Fachboden versehenen Einschubfach, in das mindestens ein ein Bodenteil, Seitenwände, eine Front- und eine Rückwand aufweisender und mindestens mit einem von der Frontwand aus zu betätigenden Schaltgerät bestückter Einschub, in Einschubrichtung geführt, einführbar ist.

Es sind eine Reihe von Schaltschranken bekannt geworden, an denen Einschubfächer dadurch gebildet werden, daß Bodenbleche an den Rahmenprofilen befestigt werden. In diese Einschubfächer können Einschübe eingefügt werden, die werkseitig mit den entsprechenden und vom Kunden gewünschten Schalt-, Steuer- und/oder Regelgeräten bestückt sind.

Bei der Bedienung des Schaltschrankes ist zu fordern, daß der Einschub in drei Stellungen festgelegt werden kann : in einer ersten Stellung, in der sowohl die Steueranschlüsse als auch die Leistungsanschlüsse an Spannung liegen, in einer zweiten Stellung, einer sogenannten Teststellung, in der lediglich die Steueranschlüsse noch an Spannung liegen, die Leistungsanschlüsse aber schon getrennt sind, und ggf. in einer dritten Stellung, der sogenannten Trennstellung, in der sowohl die Steueranschlüsse als auch die Leistungsanschlüsse von den rückseitigen, ortsfest am Schaltschrank angebrachten Kontakten getrennt sind und in der am Einschub gearbeitet werden kann.

Grundsätzlich ist dabei zu fordern, daß eine Trennung der rückseitigen Kontakte nur bei ausgeschalteten Schaltgeräten, beispielsweise bei einem ausgeschalteten Leistungsschalter vorgenommen werden kann, damit verhindert wird, daß die rückseitigen Leistungskontakte unter Spannung voneinander getrennt werden, was zu Lichtbogenerscheinungen und zu einer Beschädigung des Schaltschrankes führen kann ; zu fordern ist auch, daß in bestimmten Stellungen, z. B. in der Teststellung, eine Verriegelung vorhanden ist, durch die ein Einschalten des Schaltgerätes verhindert ist.

Bei manchen Schaltschränken ist dies dadurch erreicht worden, daß eine manuelle Verriegelung zusätzlich zu der Antriebsvorrichtung für den Schalter bzw. das Schaltgerät vorgesehen war.

Aufgabe der Erfindung ist es, einen Schaltschrank der eingangs genannten Art zu schaffen, bei dem die Führung der Einschübe, deren Verriegelung einerseits und deren Antrieb für das Schaltgerät andererseits miteinander einheitlich zusammenwirken.

Diese Aufgabe wird erfindungsgemäß dadurch gelöst, daß zur Führung des Einschubes eine am Fachboden festgelegte, profilierte Schiene vorgesehen ist, daß das Bodenteil an der der Schiene zugewandten Fläche mit einem dem Profil der Schiene angepaßten und damit zur Führung zusammenwirkenden Profil versehen ist und daß am Einschub eine Antriebsvorrichtung zur Betätigung des Schaltgerätes angebracht ist, die zusätzlich auch zur Verriegelung des Einschubes in mindestens einer Stellung durch Festlegung des Einschubes an der Schiene dient.

Eine vorteilhafte Ausgestaltung der Erfindung geht aus den Merkmalen des Anspruches 2 hervor. Diese beiden Getriebe, die einerseits zur Betätigung der Verriegelung und andererseits zur Betätigung des Schalters dienen, sind mit einer Kupplung gemäß den kennzeichnenden Merkmalen der Ansprüche 3 und 4 miteinander kuppelbar, wobei die Kupplung durch Einschieben des Schaltknopfes eingekuppelt wird.

Das erste Getriebe, also das Getriebe, das zur Verriegelung bzw. zur Entriegelung dient, kann die Merkmale des Anspruches 9 aufweisen. Der dabei verwendbare Übertragungshebel kann gemäß den kennzeichnenden Merkmalen des Anspruches 10 ausgebildet werden.

Damit die Verriegelung in den entsprechenden Verriegelungsstellungen verrastet wird, kann die Antriebsscheibe des Getriebes gemäß den kennzeichnenden Merkmalen des Anspruches 11 als Rastscheibe ausgebildet sein.

Die Verriegelungsrolle, die von dem Getriebe in Drehung versetzt wird, kann in vorteilhafter Weise eine Nut am Umfang aufweisen, deren radiale Länge der Breite der Leiste an der Schiene entspricht, so daß die Verriegelungsrolle in einer mittleren Stellung frei von der Leiste kommt, in dem die Nutkontur zur Gänze außerhalb der Leiste verläuft, wogegen sie in den beiden seitlich dazu liegenden Stellungen in Ausnehmungen an der Leiste eingreift.

Die Kupplung selbst ist so ausgebildet, wie in den kennzeichnenden Merkmalen der Ansprüche 13 und 14 dargestellt.

Weitere vorteilhafte Ausgestaltungen der Erfindung sind den weiteren Unteransprüchen zu entnehmen.

Der besondere Vorteil der erfindungsgemäßen Anordnung besteht darin, daß die Verriegelung und der Antrieb für den Schalter quasi miteinander eine Einheit bilden, so daß eine gleichzeitige Betätigung des Antriebes für das Schaltgerät und der Verriegelung mit der Gefahr, daß das Schaltgerät auch in sogenannten verbotenen Stellungen des Einschubes betätigt werden kann, verhindert ist, wobei durch die Führung des Einschubes auf der Schiene die Möglichkeit der Verbindung bzw. Kombinierung von Antrieb für den Schalter und Verriegelung möglich gemacht wird. Der Schaltknopf dient in der sogenannten freien Stellung, also in der Stellung, in der die Druckfeder zum Auseinanderdrücken der Kupplungselemente entspannt und die Kupplung ausgekuppelt ist, lediglich zur Betätigung der Verriegelungseinrichtung, so daß das Schaltgerät nicht geschaltet werden kann. Umgekehrt kann der Schaltknopf nur in einer bestimmten Stellung des Verriegelungsgetriebes, in der der Stift an der Schaltwelle mit dem Schlitz in der Halterungs- bzw. Führungswand fluchtet, betätigt und damit eingedrückt werden, so daß die Kupplung zwischen den beiden Schaltwellen eingekuppelt und der Verriegelungsantrieb quasi abgekuppelt werden, so daß ausschließlich der Antrieb des Schaltgerätes betätigt wird. In der Stellung, in der der Schaltknopf lediglich zur Betätigung der Verriegelung dient, ist der Stift mit der Antriebsscheibe für das Verriegelungsgetriebe formschlüssig verbunden. Wenn der Stift durch die Zwischenwand hindurch in die eingekuppelte Stellung gedrückt wird, wird die formschlüssige Verbindung zwischen der Antriebsscheibe und der ersten Schalterwelle gelöst, weil nämlich der Stift außer Eingriff mit der Antriebsscheibe des Verriegelungsgetriebes gelangt, so daß die erste Schaltwelle gegenüber der von der Verrastungsfeder gehaltenen Antriebsscheibe ohne weiteres frei verdrehbar ist.

Die Wirkungsweise der Anordnung soll kurz skizziert werden :

Mit der erfinderischen Ausgestaltung wird also erreicht, daß das Schaltgerät nur in bestimmten Stellungen der Verriegelung, d. h. auch in bestimmten Stellungen des Einschubes geschaltet werden kann. Hierzu hilft mit die Zuordnung der Ausnehmungen an der Leiste an der Schiene, bezogen auf die Stellungen und Ausführungen der Leistungs- und Steueranschlüsse von Einschub und Schaltschrank zueinander. Die beiden Ausnehmungen, in die die Verriegelungsrolle für die Verriegelung eingreift, liegen in Abstand zueinander und auf der einen bzw. anderen Seite der Leiste, so daß die Verriegelungsrolle in die eine Ausnehmung von links und in die andere Ausnehmung von rechts eingelegt werden kann. Der Abstand der beiden Ausnehmungen zueinander entspricht dem Abstand zwischen der Betriebs- und der Trennstellung des Einschubes. In der Betriebsstellung, also dann, wenn alle Kontakte in Eingriff stehen und die Verriegelungsrolle in die hinterste Ausnehmung eingreift, kann der Schaltknopf nach innen gedrückt und das Schaltgerät betätigt werden. Dann stehen sich der Stift und der Schlitz an der Ausnehmung gegenüber. Die Verriegelung ist dabei ausgekoppelt und wegen des Eingriffes der Verriegelungsrolle in die Ausnehmung ist auch eine Verschiebung (Herausziehen) des Einschubes aus dem Einschubfach nicht möglich. Der Schalter kann in dieser Stellung geschaltet werden. Erst nachdem er ausgeschaltet ist, kann die Kupplung der Schalterwellen entkoppelt werden, und eine Verdrehung des Verriegelungsgetriebes in die Stellung « Einschub Verfahren », bei der also die Verriegelungsrolle aus der Ausnehmung herausgelangt, ist möglich. Wenn der Einschub geringfügig herausgefahren ist, die Verriegelungsrolle also die zweite Ausnehmung noch nicht erreicht hat, ist sie durch die Leiste blockiert und der Schaltknopf kann daher nicht mehr verdreht werden. Die Blockierung ist darauf zurückzuführen, daß die Nut an der Verriegelungsrolle die Leiste umgibt und beide Nutwände beim Verdrehen der Verriegelungsrolle gegen die Außenfläche der Leiste anschlagen. Ein Einschalten des Schaltgerätes ist ebenfalls nicht mehr möglich, da der Schaltknopf aufgrund des festgehaltenen Verriegelungsgetriebes nicht mehr in die Stellung gedreht werden kann, in der der Stift mit der Ausnehmung fluchtet.

Wenn die Verriegelungsrolle die zweite Ausnehmung erreicht hat, kann der Schaltknopf wieder gedreht werden und zwar in die Richtung, in der die Verriegelungsrolle von der anderen Seite in die auf der anderen Seite gegenüber der ersten Ausnehmung liegende zweite Ausnehmung eingedreht werden kann. In dieser Verriegelungsstellung befinden sich die aufgrund des Ausschaltens des Schaltgerätes stromlos gewordenen Leistungskontakte in einer Trennstellung, einer sogenannten Teststellung, wogegen die Steuerkontakte noch in Eingriff stehen. Aus dieser Stellung kann das Verriegelungsgetriebe wieder in die Stellung « Einschub Verfahren » verdreht und der Einschub ganz herausgezogen werden. Der Schalter bzw. das Schaltgerät ist natürlich bei vollständig herausgenommenem Einschub schaltbar, da die Verriegelungsrolle und damit das Verriegelungsgetriebe frei drehbar ist. Wenn der Einschub in das Einschubfach eingeführt werden soll, dann kann dies bei eingeschaltetem Schalter nicht erfolgen, da die Verriegelungsrolle in einer Verriegelungsstellung steht, in der die Nut mit der Leiste an der Schiene nicht fluchtet. Der Schalter muß zuerst ausgeschaltet werden und dann erst kann die Verriegelungsrolle in die Stellung « Einschub Verfahren » verbracht werden. Der Einschub kann bis in die Betriebsstellung eingeschoben werden, in der die Verriegelungsrolle in die hinterste Ausnehmung eingedreht werden kann. Sowie dies erfolgt ist, ist es möglich, die Kupplung einzukuppeln, indem der Schaltknopf nach innen gedrückt wird. Erst dann, wenn der Einschub in der Betriebsstellung ist, wenn also sowohl die Steuer- als auch die Leistungskontakte in Eingriff stehen, kann der Schalter bzw. das Schaltgerät wieder eingeschaltet werden.

Anhand der Zeichnung, in der ein Ausführungsbeispiel dargestellt ist, sollen die Erfindung sowie weitere vorteilhafte Ausgestaltungen, Verbesserungen und weitere Vorteile näher erläutert und beschrieben werden.

Es zeigt :

Fig. 1 eine perspektivische Ansicht eines Bodenteiles eines Einschubes,

Fig. 2 eine auf einem Bodenblech aufgelegte Schiene, auf der das Bodenteil gemäß Fig. 1 gleiten kann,

Fig. 3 eine Längsschnittansicht der Schiene gemäß Fig. 2,

Fig. 4, 5 und 6 verschiedene Stellungen einer Verriegelungsmechanik, teilweise ersichtlich,

Fig. 7 eine Explosionsdarstellung eines Schalterantriebes,

Fig. 8 und 9 den Schalterantrieb gemäß Fig. 7, in Zusammenstellungszeichnung, in zwei unterschiedlichen Schaltstellungen,

Fig. 10 eine Aufsicht auf ein Rastelement für den Schalterantrieb gemäß Figuren 7 bis 9,

Fig. 11 eine Aufsicht auf den Mechanismus der Verriegelung,

Fig. 12 und 13 zwei Ansichten des eigentlichen Antriebes für einen Leistungsschalter innerhalb eines Einschubes und

Fig. 14 einen Einschub mit der erfindungsgemäßen Vorrichtung in perspektivischer Explosionsdarstellung.

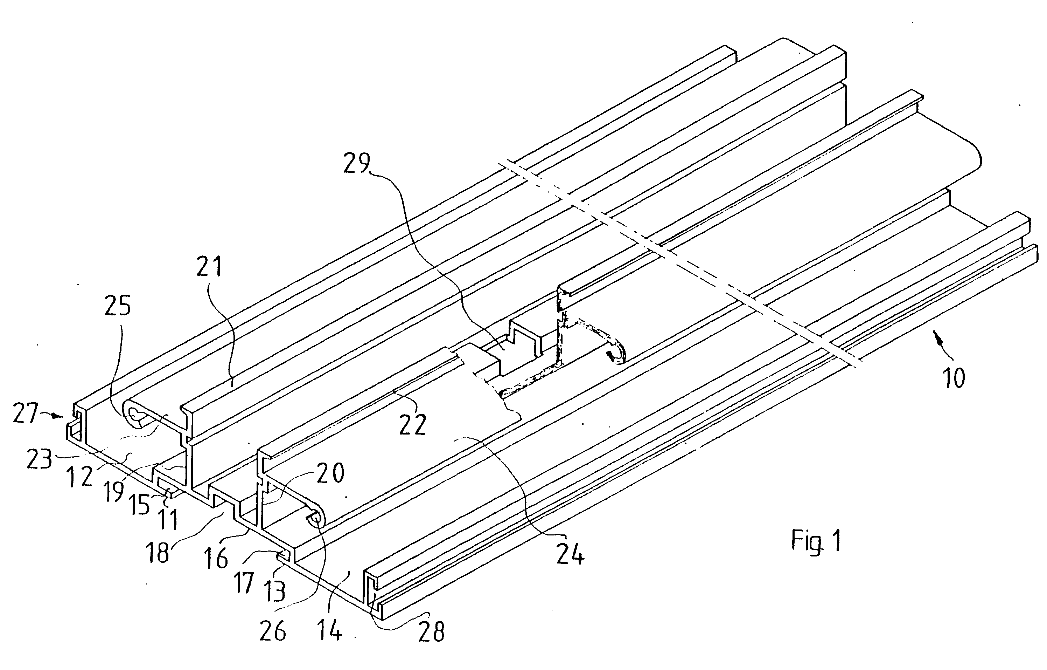

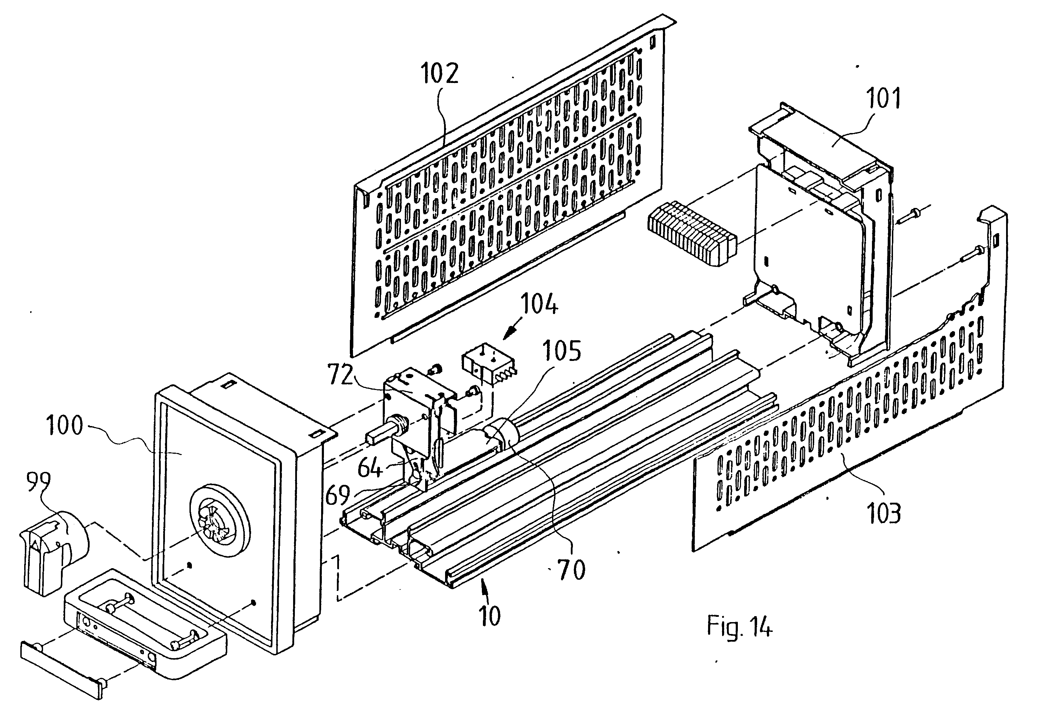

Die Figur 1 zeigt das Bodenteil 10 eines in Fig. 14 dargestellten Einschubes. Das Bodenteil 10 wird durch Seitenwände, Front- und Rückwände zu einem Einschub ergänzt. Es besitzt zwei in Abstand zueinander angeordnete, in einer Ebene liegende Auflagebereiche 12 und 14, die über ein C-förmiges Zwischenteil 16 mit einer in der Mitte angeordneten, nach unten offenen Nut 18 verbunden sind. Beidseitig an dem Zwischenteil angeformt und jeweils an die Auflagebereiche 12 und 14 anschließend, sind aufeinanderzu weisende Stege 11 und 13 vorgesehen, die mit dem Bereich 16 sich gegenüberliegende, aufeinander zu weisende Führungsnuten 15 und 17 bilden. Auf der Oberseite des Verbindungsbereiches 16 sind in Abstand zueinander zwei senkrecht dazu verlaufende Leisten 19 und 20 angeformt, deren freie Enden 21 und 22 nach außen abgewinkelt sind, wodurch der Aufschnappbereich einer Hutprofilschiene gebildet wird. In Abstand zu den freien Enden 21 und 22 sind parallel zu den Bereichen 12 und 14 verlaufende und voneinander wegweisende Ansatzleisten 23 und 24 vorgesehen, deren freien Endkanten umgebogen sind und dadurch kreisförmige Kreisöffnungen 25 und 26 bilden, in die Schrauben einschraubbar sind, die der Halterung der Front- und Rückwände dienen. Der Teil zwischen dem Bereich 12 bzw. 14 und den Ansatzleisten 23 und 24 kann als Kabelkanal Verwendung finden. Die beidseitig liegenden Kanten der Auflagebereiche 12 und 14 sind mit einem C-förmigen Profil 27 und 28 versehen, das nach außen hin offen ist und das zum Einsetzen und zur Halterung von nicht näher dargestellten Seitenwänden dient. Die Nut 18 besitzt etwa in ihrer vorderen Hälfte eine Aussparung 29, deren Aufgabe weiter unten erläutert wird.

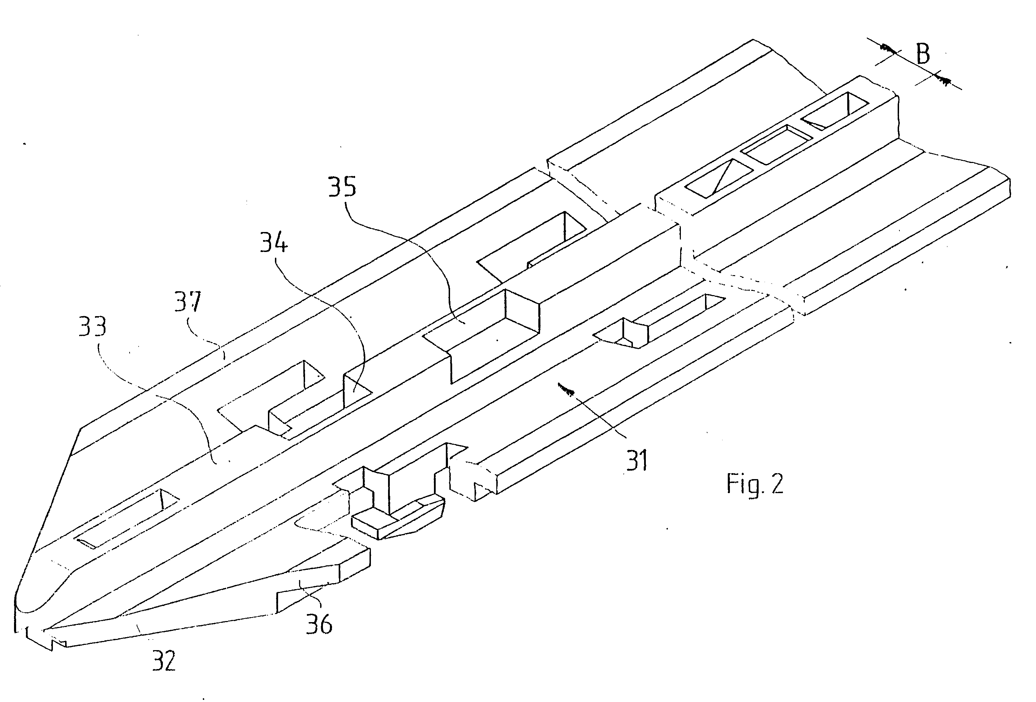

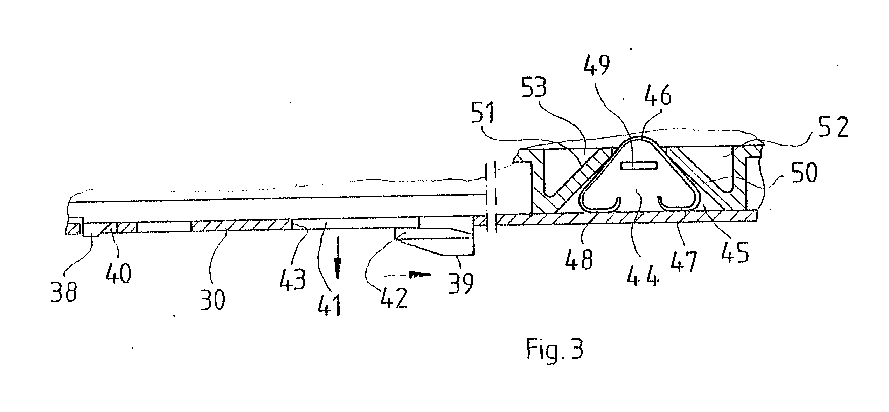

Die Figur 2 zeigt eine auf einem in dem Schaltschrank gelagerten Bodenblech 30 (siehe auch Fig. 3) aufgesetzte Schiene 31, die aus Kunststoff gebildet ist und auf der das Bodenteil 10 des betreffenden Einschubes gleiten kann. Die Schiene 31 besitzt einen Bodenbereich 32, in dessen mittlerem Abschnitt eine erhabene Leiste 33 angeformt ist, die über die gesamte Länge der Schiene 31 verläuft. Die Leiste 33 besitzt zwei seitliche Aussparungen, nämlich 34 auf der einen Seite und 35 auf der anderen Seite, die zur Verriegelung dienen, wie weiter unten näher erläutert werden soll. An den beiden Kanten des Bodenbereiches sind Federleisten 36 und 37 angeformt, die dann, wenn der Einschub eingeführt werden soll, in die Nuten 17 bzw. 15 des Bodenteiles 10 eingreifen sollen. Durch Zusammenwirken der Federleisten 36 und 37 mit den Nuten 15 und 17 und der Leiste 33 mit der Nut 18 wird also das Bodenteil 10 auf der Schiene 31 geführt.

Zur Halterung der Schiene 31 an dem Bodenblech 30 sind nach unten herausragende Fortsätze 38 und 39 vorgesehen, die in Schlitze 40 und 41 im Bodenblech 30 eingreifen. Der Fortsatz 39 ist hakenförmig ausgebildet und sein nach vorne weisender Schenkel 42 umgreift dann die Kante 43 des Schlitzes 41 im Bodenblech. Im hinteren Bereich besitzt die Schiene 31 eine nach unten hin offene Ausnehmung 44, in der eine Biegefeder 45 gehaltert ist, die die Leiste 33 nach oben hin überragt und im eingeschobenen Zustand des Einschubes das Bodenteil 10 berührt. Das Bodenteil 10 kann dann im Nutgrund der Nut 18 Ausnehmungen (nicht weiter dargestellt) aufweisen, in die die Spitze 46 der Feder 45 eingreifen kann ; hierdurch wird eine Verrastung bewirkt. Die Feder 45 ist V-förmig ausgebildet, wobei die Schenkelenden 47 und 48 nach innen abgebogen sind. Der V-Form angepaßt ist auch die Ausnehmung 44. Sie ist von einem Quersteg 49 durchgriffen, der der Halterung der Feder 45 dienen soll. Die Ausnehmung 44 wird beidseitig begrenzt durch Wände 50 und 51, wodurch nach oben offene Aussparungen 52 und 53 gebildet werden, welch letztere im wesentlichen nur zur Gewichtseinsparung dienen.

Wie oben schon erwähnt, wird die Schiene 31 gemäß Fig. 2 auf das Bodenblech 30 aufgesetzt und dort gehaltert, wobei die Spitze 46 der Feder 45 die Leiste 33 nach oben überragt. Auf die Leiste oder Schiene 31 wird der Einschub mit dem Bodenteil 10 gemäß Fig. 1 aufgefahren, indem, wie oben erwähnt, die Federleisten 36 und 37 in die Nuten 17 und 15 und die Leiste 33 in die Nut 18 eingreifen. Zum besseren Einführen des Bodenteiles ist die Schiene nach vorne hin zugespitzt, wobei der Bodenbereich beidseitig angeschrägt und die Leiste 33 nach vorne hin abfallend abgeschrägt ist. Die Feder 45 dient dabei zur Erdung des Einschubes, indem sie das Bodenteil 10 des Einschubes mit dem Bodenblech 30 elektrisch-galvanisch verbindet.

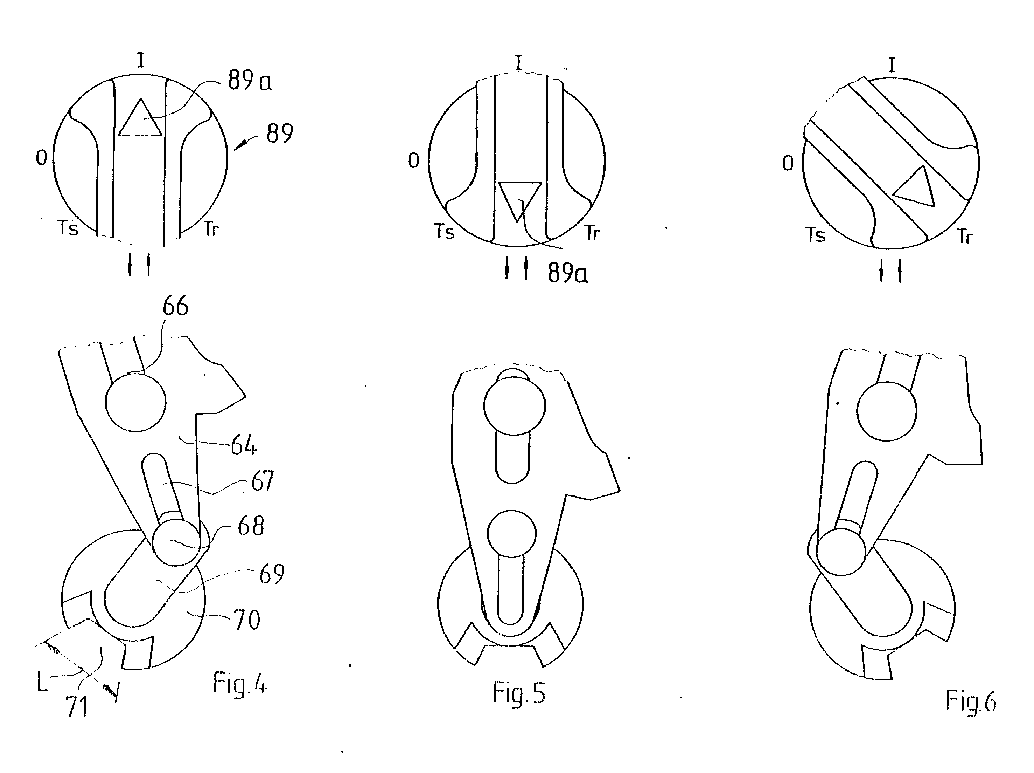

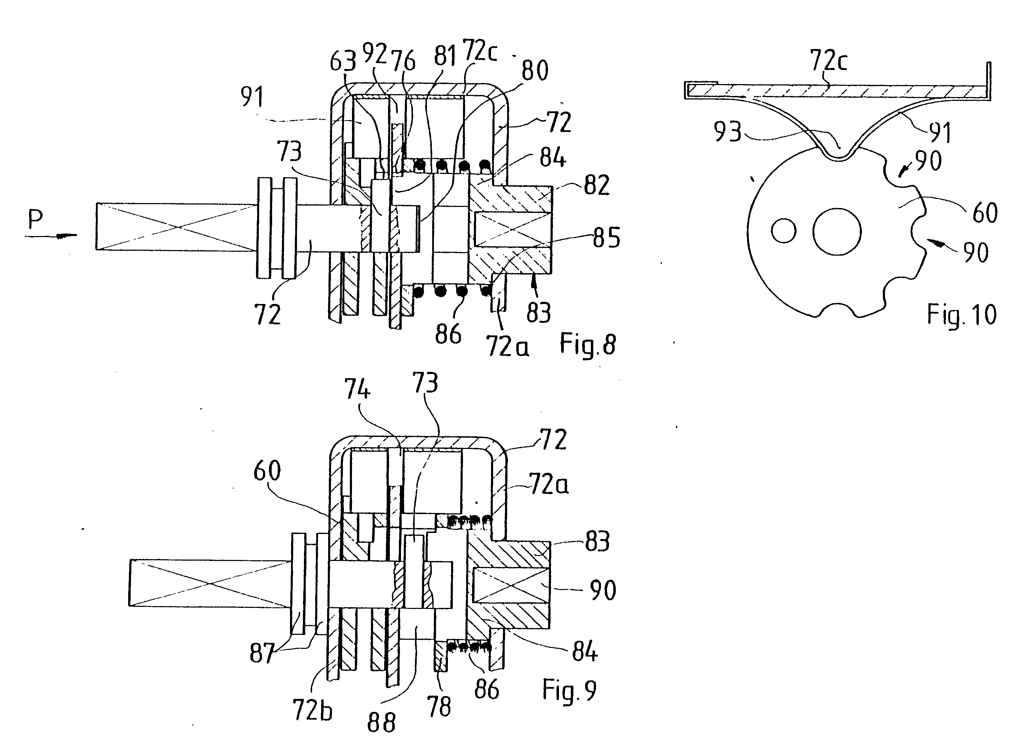

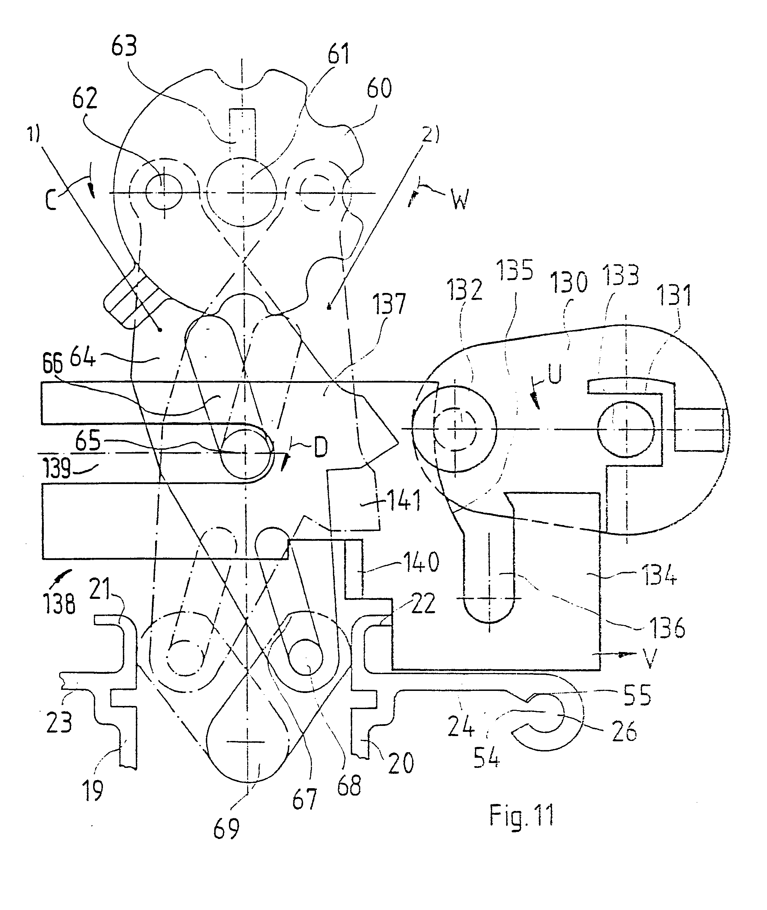

Es sei nun Bezug genommen auf die Figur 11. Dort ist ein Antrieb für eine Verriegelung dargestellt, der zur Verriegelung des Einschubes in Betriebsstellung und in Teststellung Verwendung findet. Man erkennt in der Figur 11 die Leisten 19 und 20, an denen die Ansatzleisten 23 und 24 angeformt sind. An der rechten Ansatzleiste 24 ist deutlich die kreisförmige Öffnung 26 zu sehen, die durch Abbiegen der Endkante der Ansatzleiste 24 gebildet ist. Die Endkante ist allerdings nicht vollständig zu einem Vollkreis gebogen, sondern läßt eine nach innen weisende Öffnung 54 frei, wobei aber an der Unterseite der Ansatzleiste 24 ein Vorsprung 55 vorgesehen ist, der die kreisförmige Öffnung noch weiter zu einem Kreis ergänzt. Das Bodenteil wird durch Extrudieren oder Strangpreßziehen hergestellt ; die Öffnung 54 ist werkzeugbedingt. An den freien Enden der Leisten 19 und 20 erkennt man die Enden 21 und 22. Der Verriegelungsantrieb besitzt eine Rastscheibe 60 (siehe auch Fig. 8 bis 10), die eine Zentralbohrung 61 und eine Exzenterbohrung 62 aufweist. An die Zentralbohrung 61 schließt sich ein Schlitz 63 an, dessen Wirkungsweise weiter unten ebenfalls näher erläutert werden soll. An der Exzenterbohrung 62 angelenkt ist ein Übertragungshebel 64, der auf einer ortsfesten Achse 65 aufgelagert ist. Der Übertragungshebel besitzt im Bereich seiner Lagerungsstelle ein erstes Langloch 66 und an seinem von der Anlenkstelle bei der Exzenterbohrung 62 aus gesehen gegenüberliegenden Ende ein zweites Langloch 67. Die beiden Langlöcher 66 und 67 liegen mit ihrer Mittelachse auf einer gleichen Linie und fluchten mit der Mittelachse der Anlenkstelle der Exzenterbohrung 62. Das Langloch 67 wird durchgriffen von einem Zapfen 68, der mit einer Lasche 69 fest verbunden ist. Aus den Fig. 4 bis 6 ist ersichtlich, daß mit der Lasche 69 ein Verriegelungsrad 70 fest verbunden ist, das in Verlängerung der Mittellinie bzw. Mittelachse der Lasche 69 eine Aussparung 71 aufweist, deren Umfangslänge L der Breite B der Leiste 33 (siehe Fig. 2) entspricht. In der Fig. 11 sind zwei Stellungen des Übertragungshebels und der Lasche 69 eingetragen, und zwar eine dick ausgezogene Stellung, die derjenigen gemäß Fig. 4 entspricht, und eine strichpunktiert ausgezogene Stellung, die der Stellung gemäß Fig. 6 entspricht. Wenn die Rastscheibe 60 angetrieben wird, und zwar aus der Stellung 1 entgegen dem Uhrzeigersinn in Pfeilrichtung C, dann verschiebt sich der Übertragungshebel 64 nach rechts unten, wobei die Achse 65 und der Zapfen 68 in den Langlöchern 66 und 67 gleiten. Wenn die Anlenkstelle bei 62 die vertikal verlaufende Mittelachse der Anordnung erreicht und überschreitet, schnappt der Übertragungshebel um, dergestalt, daß bei weiterem Verdrehen die strichpunktierte Stellung erreicht wird. Die Stellung, in der die Exzenterbohrung 62 auf der vertikalen Mittelachse liegt, ist in der Fig. 5 dargestellt. Damit wird das Verriegelungsrad 70 aus der Stellung nach Fig. 4, in der die Aussparung 71 nach links weist, über die Mittelstellung (Fig. 5) in die Stellung verdreht, die in Fig. 6 dargestellt ist und in der die Aussparung 71 nach rechts weist. Wie aus der Fig. 14 ersichtlich ist, ist die Anordnung gemäß Fig. 11 angebracht an einem Bügel 56, der an der Frontwand 100 des Einschubes gemäß Fig. 14 angebracht ist.

Wie aus der Figur 14 weiterhin ersichtlich ist, ist der Einschub gebildet aus dem Bodenteil 10, einer Frontwand 100, einer Rückwand 101 und zwei Seitenwänden 102 und 103, wobei die Verriegelung insgesamt mit 104 bezeichnet ist. Diese Verriegelung ist in den Fig. 4 bis 6 und 11 näher dargestellt.

Daß das Verriegelungsrad 70 mit der Lasche 69 über eine Achse verbunden ist, ist den Zeichnungen nicht zu entnehmen, da diese Achse von einer Abdeckung 105 abgedeckt ist, in der sie übrigens auch geführt ist. Die Abdeckung 105 bildet mit dem Bügel 56 eine Einheit. Im montierten Zustand durchgreift das Verriegelungsrad 70 die Ausnehmung 29 und ragt nach unten in das Innere der Nut 18 (siehe auch Fig. 14).

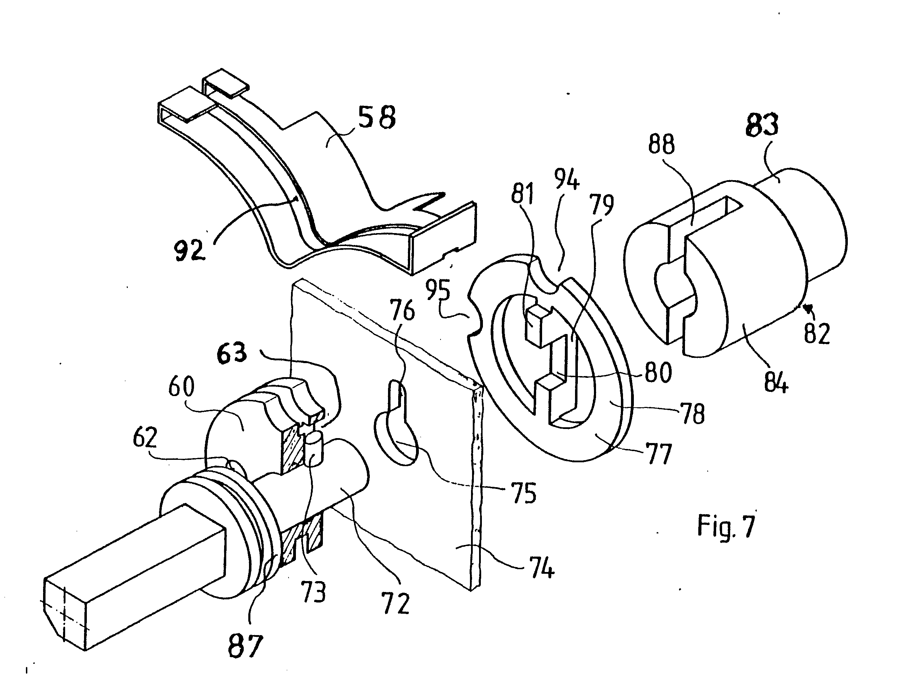

Die Rastscheibe 60 mit der Exzenterbohrung 62 ist auf einer Schaltwelle 72 angebracht bzw. verschiebbar gelagert. An der Schalterwelle 72 ist ein senkrecht zur Welle 72 verlaufender Zapfen 73 befestigt. Die Rastscheibe 60 besitzt, wie aus der Fig. 11 ersichtlich, den Schlitz 63, in den — in der in Fig. 8 bzw. 7 gezeigten Stellung — der Zapfen 73 eingreifen kann. Dabei ist die Schaltwelle 72 herausgezogen und der Zapfen 73, der die Welle 72 durchgreift und in ihr durch Pressitz festliegt, sitzt vollständig im Schlitz 63. Die Schaltwelle 72 durchgreift eine mit dem Bügel 56 in nicht näher dargestellter Weise verbundene Wand 74 durch eine Bohrung 75 (Fig. 7), die eine schlitzartige Ausformung bzw. Ausnehmung 76 aufweist und deren Abmessung dem Zapfen 73 angepaßt ist. Gegen die andere Seite der Wand 74 liegt ein Kupplungsstück 77 an, das einen flansch- oder ringförmigen Bereich 78 aufweist, welcher durch einen Steg 79 überbrückt ist, der durch den Mittelpunkt des ringförmigen Bereiches 78 verläuft. Der Steg 79 besitzt auf seiner einen, dem Betrachter zugewandten Seite einen Rücksprung 80, dessen Öffnungsweite dem Durchmesser der Schaltwelle 72 entspricht. Auf dieser Seite besitzt der Steg 79 einen die vorne liegende Fläche überragenden Vorsprung 81, der quasi an der einen Wand des Rücksprunges 80 beginnt und an dem Innenumfang des ringförmigen Bereiches 78 endet. Von der gegenüberliegenden, in der Zeichnung nicht sichtbaren Fläche des ringförmigen Bereiches 78 ragt der Steg 79 ebenfalls vor. An das Kupplungsstück 77 schließt sich ein Kupplungsteil 82 an, das einen Bereich 83 mit geringerem Durchmesser aufweist, an den sich ein Bereich 84 mit größerem Durchmesser anschließt ; der Bereich 83 durchgreift eine Bohrung 85 an der rechts befindlichen, senkrecht verlaufenden Wand des Bügels 56. Die Stufung, die durch den Übergang zwischen dem kleineren und größeren Bereich 83 bzw. 84 gebildet ist, legt sich gegen die Innenfläche der rechts gelegenen, vertikal verlaufenden Wandung des Bügels 56 an. Die in der Zeichnung Fig. 7 vorne liegende Fläche des ringförmigen Bereiches 78 des Kupplungsstückes 77 legt sich an diejenige Fläche der Wand 74, die der rechts gelegenen Wand des Bügels 56 gegenüberliegt, an und wird durch eine sich gegen den ringförmigen Bereich 78 des Kupplungstückes 77 abstützende Feder 86 gegen die Wand 74 gedrückt. Man erkennt in der Figur 8, daß der Vorsprung 81 in die schlitzartige Ausformung 76 in der Wand 74 in der gezeigten Stellung eingreift, wogegen er in der Stellung gemäß Fig. 9, wenn also die Feder 86 vollständig zusammengedrückt ist aufgrund einer Druckkraft P auf die Schaltwelle 72, aus der schlitzartigen Ausformung 76 freikommt. In der Fig. 8 ist ersichtlich, daß das nach innen weisende Ende der Schaltwelle 72 in den Rücksprung 80 des Steges 79 am Kupplungsstück 77 eingreift und daß die Schaltwelle 72 praktisch aufgrund des Druckes der Feder 86 über die Berührungsverbindung zwischen dem Ende der Schaltwelle 72 und der zugewandten Fläche des Rücksprunges 80 ganz nach links gedrückt wird, so daß der Zapfen 73 in den Schlitz 63 der Rastscheibe 60 hineingreifen kann. Dadurch kann die Schaltwelle 72 verdreht werden, ohne daß das Kupplungsteil 82 mitgedreht wird. Wenn nach Aufbringung einer Druckkraft P die Schaltwelle nach innen gedrückt wird, und zwar soweit, bis ein Kragen 87, der mit der Schaltwelle 72 fest verbunden ist, gegen die Außenfläche der weiteren oder zweiten, linken, senkrecht verlaufenden Wand des Bügels 56 anliegt, dann drückt das freie Ende der Schalterwelle 72 gegen die Bodenfläche des Rücksprunges 80 im Steg 79 des Kupplungsstückes 77 und damit dessen ringförmigen Bereich 78 entgegen dem Druck der Feder 86 nach rechts, wobei der Zapfen 73 aus dem Schlitz 63 der Rastscheibe 60 herausgelangt, durch den Schlitz 76 in der Wand 74 hindurchgeführt wird und danach in den Raum rechts von der Wand 74 gelangt (siehe Figur 9).

Wie aus der Figur 7 ersichtlich, besitzt das Kupplungsteil 82 an der Stirnfläche des Bereiches 84 mit größerem Durchmesser einen senkrecht verlaufenden Schlitz 88, und man erkennt bzw. muß wissen, daß der Innendurchmesser des ringförmigen Bereiches 78 des Kupplungsstückes 77 größer ist, wenn auch nur geringfügig, als der Außendurchmesser des Bereiches 84 mit größerem Durchmesser des Kupplungsteiles 82. Auf diese Weise kann das Kupplungsteil 82 mit seinem Bereich 84 größeren Durchmessers in die Öffnungen zwischen dem Innenrand des ringförmigen Bereiches 78 und den Außenflachen des Steges 79 des Kupplungsstückes 77 eingreifen, wodurch der Ring 78, bezogen auf das Kupplungsteil 82, festgelegt bzw. eingekuppelt wird. Die Länge des genannten Bereiches 84 mit größerem Durchmesser ist aber dann zusätzlich noch so gewählt, daß auch der Zapfen 73 in den Schlitz 88 eingreifen kann, wie aus der Fig. 9 ersichtlich ist. Man erkennt in der Fig. 9 das Kupplungsteil 82 mit dem Bereich 83 mit kleinerem Durchmesser, den angrenzenden Bereich 84, mit größerem Durchmesser, sowie den Schlitz 88, der den Zapfen 73 aufnimmt.

Wie aus der Fig. 9 weiterhin zu entnehmen, ist die Länge des Bereiches 84 mit größerem Durchmesser geringfügig kleiner als der Abstand zwischen der hinteren, vertikalen Wand des Bügels 56 und der Wand 74. Dadurch ist eine Drehbewegung des Kupplungsteiles 82 gewährleistet. In hineingedrückter Lage der Schalterwelle 72 greift der Zapfen 73 in den Schlitz 88 des Kupplungsteiles 82, so daß eine Koppelung zwischen der Schalterwelle 72 und dem Kupplungsteil 82 erzeugt wird. Eine Drehung der Schalterwelle 72 in dieser eingedrückten Lage führt nun auch zu einer Drehung des Kupplungsteiles 82.

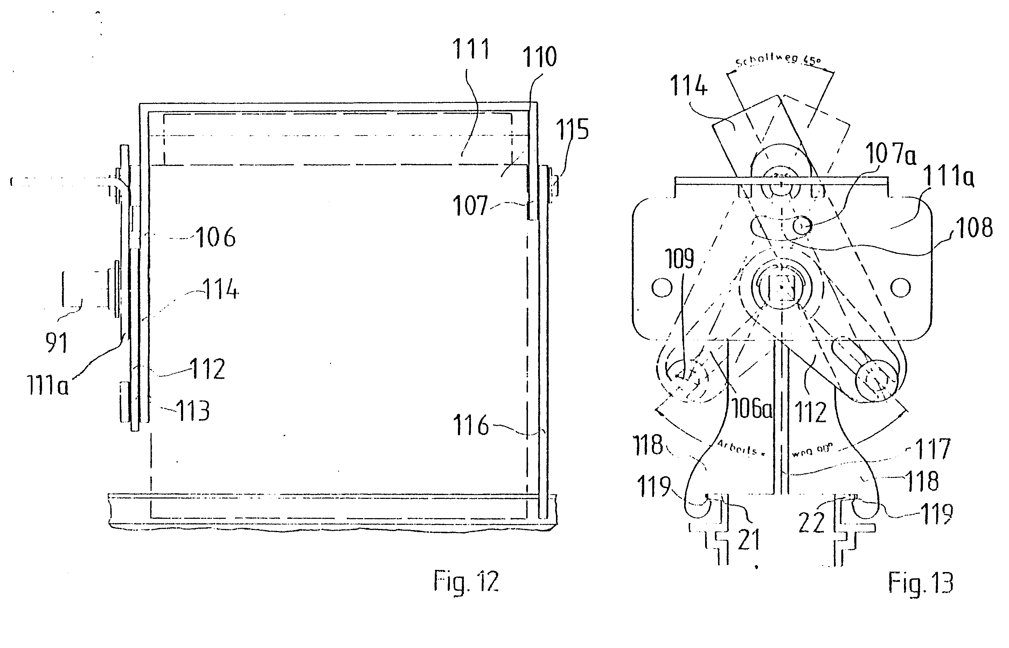

Links von dem Kragen 87 ist die Schalterwelle 72 mit einem Profil versehen, so daß sie formschlüssig mit einem in den Fig. 4 bis 6 teilweise ersichtlichen Schaltknebel 89 verbunden werden kann. Analog dazu besitzt das Kupplungsteil 82 eine profilierte Öffnung 90, in die die Schalterwelle 91 eines in der Fig. 12 strichliert dargestellten Leistungsschalters 110 eingreifen kann.

Wie aus den Fig. 10 und 11 ersichtlich ist, ist die Rastscheibe 60 mit mehreren am Umfang angeordneten Rastausnehmungen 57 verbunden. An dem oberen Steg des Bügels 56 ist eine Blattfeder 58 befestigt, die einen Schlitz 92 aufweist, der zur Aufnahme der Wand 74 dient ; umgekehrt wird durch die Wand 74 die Blattfeder 58 geführt. Die Blattfeder 58 ist mit ihrem einen Ende durch Umbördeln bzw. Umbiegen in gleicher Weise wie auch am anderen Ende an dem Bügel 56 befestigt. Ihre Form ist annähernd V-förmig und mit ihrer Spitze 93 greift sie in die entsprechenden Rastausnehmungen 57 ein, wodurch eine Verrastung der Rastscheibe 60 bewirkt wird. In gleicher Weise greift die Spitze 93 auch in eine von zwei Rastausnehmungen 94 und 95 des ringförmigen Bereiches 78 des Kupplungsstückes 77 ein. Die Rastausnehmungen 57 an der Scheibe 60 dienen zur Verrastung des Getriebes, das aus der Scheibe 60, dem Übertragungshebel 64 und der Lasche 69 gebildet ist, in der sogenannten Betriebsstellung, der Teststellung und weiterer Stellungen. Die Verrastung in den Rastausnehmungen 94 und 95 erfolgt nur dann, wenn der ringförmige Bereich 78 des Kupplungsstückes 77 verdreht wird ; dann dienen die Verrastungen quasi zur Halterung des Antriebes in den Stellungen « eingeschaltet » oder « ausgeschaltet » (siehe weiter unten).

Die Fig. 12 und 13 zeigen eine Antriebsvorrichtung zur Betätigung eines Leistungsschalters 110. Dieser Leistungsschalter ist nur strichliert dargestellt und auf die Enden 21 und 22 der Leisten 19 bzw. 20 aufgeschnappt. Er besitzt nach oben herausragend einen Schaltknebel oder — wenn der Leistungsschalter mehrpolig ist — mehrere Schaltknebel 111, die durch ein nicht näher dargestelltes Kupplungsstück (zu entnehmenn beispielsweise der DE-PS 2 532 192) miteinander verbunden sind.

Die Schalterwelle 91 ist an einem Haltewinkel 111a gelagert und an der Schalterwelle 91 ist eine Lasche 112 befestigt. Das freie Ende der Lasche 112 ist mittels einer Verbindungsachse 113, die nur strichliert dargestellt ist, mit einem Schaltbügel 114 verbunden, der an einer Achse 115 gelagert ist. Diese Achse 115 ist ihrerseits ortsfest an einem Halteprofil 116 gelagert, das, wie aus der Fig. 13 ersichtlich, einen zentralen Schlitz 117 aufweist, wodurch zwei Plattenteile 118 gebildet sind, an deren Enden Nuten 119 angeformt sind. In diese Nuten 119 greifen die Enden 21 und 22 am Bodenteil 10 bzw. an dessen Leisten 19 und 20 zur Halterung des Halteprofils 116 ein. Der Schaltbügel 114 ist U-förmig ausgebildet, und zwar mit einem längeren Schenkel 106 und einem kürzeren Schenkel 107 ; der längere Schenkel 106 steht mit der Lasche 112 in Verbindung. Wie aus der Fig. 13 ersichtlich ist, wird durch Verdrehung der Schalterwelle 91 auch die Lasche 112 verdreht, und dadurch der Schaltbügel 114 aus der einen, mit ausgezogenen Linien gezeichneten Stellung in die zweite, mit strichpunktierten Linien gezeichnete Stellung verschwenkt. Zur zusätzlichen Führung des Schaltbügels 114 ist an diesem ein Zapfen 107a vorgesehen, der in einem kreisbogenförmigen Langloch 108 des Haltewinkels 111a geführt ist. Die Enden der Lasche 112 sind ebenfalls geschlitzt, damit eine an dem freien Ende des längeren Schenkels 106 des Schaltbügels 114 angeordnete Kupplungsachse 109 sich frei bewegen kann. Wegen der unterschiedlichen Kreise, die die Spitze der Lasche 112 und die Spitze des Schaltbügels 114 beschreibt, muß eine ausreichende Toleranz zur freien Beweglichkeit für die Kupplungsachse 109 vorgesehen sein ; dies wird durch ein Langloch 106a (welches auch als Schlitzung zu bezeichnen ist) in der Lasche gewährleistet. Der bereits erwähnte Schaltknebel zur Betätigung der Antriebs- und Verriegelungsvorrichtung sowie zur Betätigung des Schalters ist außer den Figuren 4 bis 6 auch der Figur 14 zu entnehmen und mit der Bezugsziffer 89 bezeichnet. Er kann, worauf hier nicht näher einzugehen ist, in den verschiedenen Stellungen, insbesondere in der Betriebsstellung, verriegelt bzw. verschlossen werden.

Die Wirkungsweise der Anordnung ist wie folgt zu erläutern :

Wie aus der Fig. 2 ersichtlich ist, besitzt die Schiene 31 zwei Aussparungen 34 und 35, von denen die Aussparung 35 die in Einschubrichtung gesehen hintere Aussparung ist. Wenn der Einschub von vorne eingeschoben werden soll, muß das Verriegelungsgetriebe betätigbar sein, d. h. also, daß der Zapfen 73 (siehe Fig. 7) vor der Wand 74 liegen muß. Dies bedeutet aber weiterhin, daß der Schalter bzw. das Schaltgerät ausgeschaltet ist. Das Verriegelungsgetriebe muß nun so betätigt werden, daß das Verriegelungsrad 70 in die in Fig. 5 dargestellte Stellung verdreht werden kann. Dann nämlich liegt das Verriegelungsrad 70 mit seiner Aussparung 71 außerhalb der Leiste 33 und der Einschub kann eingeschoben werden. Der Einschub kann nun vollständig eingeschoben werden, es besteht aber auch die Möglichkeit, den Einschub lediglich soweit einzuschieben, daß das Verriegelungsrad 70 in die erste bzw. vordere Ausnehmung 34 eingreifen kann. Es ist dies die sogenannte Teststellung gemäß Fig. 6. In dieser Teststellung sind (nicht weiter dargestellt) die Steueranschlüsse am Einschub mit den Steueranschlüssen am Schaltschrank in Eingriff, wogegen die Leistungskontakte noch außer Eingriff sind. Der Einschub kann nun getestet werden. Zum weiteren Verfahren wird dann das Verriegelungsrad wieder in die Stellung gemäß Fig. 5 verdreht ; der Einschub kann nun weiter eingefahren, d. h. in seine Betriebsstellung gefahren werden, in der die Leistungskontakte am Schaltschrank und am Einschub in Eingriff gelangen. Zur Verriegelung in dieser Stellung wird das Verriegelungsrad 70 in die Stellung gemäß Fig. 4 verdreht, wobei es in die Nut 35 eingreift. In dieser Einschubstellung bzw. aus dieser Stellung heraus kann durch weiteres Verdrehen des Schaltknebels 89 diejenige Stellung der Schaltwelle 72 erreicht werden, in der der Zapfen 73 mit der Ausnehmung 76 fluchtet, so daß er durch die Wand 74 hindurchgedrückt und in den Schlitz 88 des Kupplungsteiles 82 hineingeschoben werden kann, wodurch die Rastscheibe 60 abgekuppelt und die zweite Schalterwelle 91 zur Betätigung des Schaltgerätes eingekuppelt werden. Nun kann der Schalter bzw. das Schaltgerät eingeschaltet weden. Da das Verriegelungsrad 70 in der Lage gemäß Fig. 4 in die Ausnehmung 35 der Schiene 31 eingreift, kann der Einschub nicht mehr bewegt werden und ein Verdrehen des Schaltknebels 89 in die Stellung, in der der Zapfen 73 wieder mit der Ausnehmung 76 fluchtet, geht zwangsläufig einher mit einer vorherigen Ausschaltung des Schaltgerätes. Wenn der Einschub herausgezogen werden soll, dann muß also der Schalter zunächst ausgeschaltet werden, danach erst kann die Verriegelungsrolle in die Stellung gemäß Fig. 5 verbracht werden, in eine Stellung, in der der Schalter, dann nicht mehr betätigt, d. h. eingeschaltet werden kann. Der Schaltknebel 89 besitzt eine Stellung « I » (Einschaltstellung) und eine Stellung « O » (Ausschaltstellung). Der Pfeil 89A in Figur 4 zeigt in die Einschaltstellung, also in die Stellung, in der das Verriegelungsrad 70 in die Ausnehmung 35 eingreift. Damit das Verriegelungsrad 70 in die Stellung gemäß Fig. 5 verbracht werden kann, muß der Schaltknebel 89 entgegen dem Uhrzeigersinn verdreht werden. Er muß dann aus der Einschaltstellung über die Ausschaltstellung um 180° verdreht werden, bis der Pfeil 89A senkrecht nach unten zeigt (Fig. 5).

Es sei nochmals bezug genommen auf die Figur 11. Die Figur 11 zeigt ein Schloß, das am Einschub befestigt ist und eine verdrehbare, ovale Scheibe 130 aufweist, an der ein Vierkantprofil 131 angeformt ist, das mit einem Schlüssel betätigt werden kann. Die ovale Scheibe 130 ist auf einer Achse 133 drehbar gelagert. Am linken Ende der Scheibe 130 ist ein Zapfen 132 angebracht.

Das Schloß besitzt ferner eine Verriegelungsscheibe 134, die eine Kurvenbahn 135 aufweist, deren Radius dem Drehradius des Zapfens 132 entspricht. Die Scheibe 134 besitzt ferner eine Längsnut 136 sowie einen Fortsatz 137, der in einem Gabelbereich 138 mit einem Schlitzloch 139 endet. Das Schlitzloch 139 umfaßt dabei die Achse 65, so daß die Scheibe 134 geführt ist. An der Verriegelungsscheibe 134 ist ferner ein senkrecht dazu verlaufender Vorsprung 140 angeformt, der in die Bewegungsbahn des Übertragungshebels 64 eingreift. Wenn die ovale Scheibe 130 entgegen dem Uhrzeigersinn in Pfeilrichtung U verdreht wird, greift die Achse bzw. der Zapfen 132 in das Langloch 136 und verschiebt die Verriegelungsscheibe 134 nach rechts in Richtung des Pfeiles V. Dadurch gelangt der Vorsprung 140 frei von einer am Übertragungshebel 64 angeformten Nase 141, so daß der Übertragungshebel 64 von dem Antrieb aus der strichpunktiert dargestellten Stellung verdreht bzw. in die mit ausgezogenen Linien gezeichnete Stellung bewegt werden kann. Bei einer Verdrehung der Antriebsscheibe 60 im Uhrzeigersinn wird nämlich zuerst der Übertragungshebel 64 in Pfeilrichtung D verschoben, wobei die Nase 141 dann, wenn sich die Verriegelungsscheibe 134 in der gezeichneten Stellung befindet, gegen den Vorsprung 140 der Verriegelungsscheibe 134 anlegt und damit eine weitere Verschiebung des Übertragungshebels 64 in Pfeilrichtung D behindert ist. Erst dann, wenn die Scheibe 130 in Pfeilrichtung U verdreht wird, so daß der Zapfen 132 in die Längsnut 136 eingreift und die Verriegelungsscheibe 134 in Pfeilrichtung V soweit verfahren ist, daß der Vorsprung 140 aus dem Bewegungsweg der Nase 141 herauskommt bzw. die Nase 141 von dem Vorsprung 140 freikommt, kann eine weitere Verdrehung der Antriebsscheibe 60 und damit eine weitere Verschiebung des Übertragungshebels in Pfeilrichtung D erfolgen. Die dick ausgezogen gezeichnete Stellung kennzeichnet die sogenannte Betriebsstellung (siehe Fig. 4), in der in der gezeichneten Stellung der Scheibe 130 bzw. der Verriegelungsscheibe 134 der Antrieb und die Verriegelung selbst verriegelt sind.

**Patentansprüche**

1. Elektrischer Schaltschrank mit mindestens einem mit einem durch ein Blechteil gebildeten Fachboden versehenen Einschubfach, in das mindestes ein ein Bodenteil (10), Seitenwände (102, 103), eine Front- (100) und eine Rückwand (101) aufweisender und mindestens mit einem von der Frontwand aus zu betätigenden Schaltgerät bestückter Einschub, in Einschubrichtung geführt, einführbar ist, dadurch gekennzeichnet, daß zur Führung des Einschubes eine am Fachboden festgelegte, profilierte Schiene (31) vorgesehen ist, daß das Bodenteil (10) an der der Schiene zugewandten Fläche mit einem dem Profil der Schiene angepaßten und damit zur Führung zusammenwirkenden Profil (18) versehen ist und daß am Einschub eine Antriebsvorrichtung zur Betätigung des Schaltgerätes (110) angebracht ist, die zusätzlich auch zur Verriegelung des Einschubes in mindestens einer Stellung durch Festlegung des Einschubes an der Schiene dient.

2. Schaltschrank nach Anspruch 1, dadurch gekennzeichnet, daß die durch einen drehbaren Schaltknopf (89) betätigbare Antriebsvorrichtung ein erstes Getriebe zur Betätigung einer in eine Ausnehmung an der Schiene (31) einrastbaren Verriegelungsrolle (70) und ein weiteres, mit dem ersten Getriebe kuppelbares zweites Getriebe zur Betätigung des Schaltgerätes (110) umfaßt.

3. Schaltschrank nach Anspruch 2, dadurch gekennzeichnet, daß als Kupplung eine Nut-Federanordnung vorgesehen ist, die durch Druckfedern (86) auseinandergedrückt und in dieser Lage entkuppelt ist, durch Druck auf den Schaltknopf (89) jedoch ineinander fügbar und so kuppelbar ist, wobei in einem vorbestimmten Drehbereich des Schaltknopfes die Kupplung bleibend gekuppelt ist.

4. Schaltschrank nach Anspruch 3, dadurch gekennzeichnet, daß beidseitig an die Kupplung durch diese kuppelbare Schaltwellen (72, 91) angeschlossen sind, die in einer Wand (74) am Einschub geführt sind, und daß an der dem ersten Getriebe zugeordneten ersten Schaltwelle (72) ein radial vorstehender Stift (73) angeordnet ist, der in entkuppeltem Zustand vor und in gekuppeltem Zustand nach Durchführen des Stiftes durch die Wand (74) hinter dieser gehalten ist und in letzterer Stellung die Kupplung im gekuppeltem Zustand verriegelt.

5. Schaltschrank nach einem der vorigen Ansprüche, dadurch gekennzeichnet, daß mit der ersten und zweiten Schaltwelle (72, 91) je eine Rastscheibe (60 ; Kupplungsstück 77) direkt oder indirekt verbunden ist, die mittels Rastfedern (58) in bestimmten Stellungen festgehalten sind.

6. Schaltanlage nach einem der vorigen Ansprüche, dadurch gekennzeichnet, daß die Schiene (31) aus Kunststoff gebildet und am Bodenblech (30) mittels Haken (39, 42) festgehakt ist und daß in der Schiene am in Einschiebrichtung gesehen hinteren Ende ein Federelement (45) angeordnet ist, das das Bodenteil (10) des Einschubes mit dem Bodenblech (30) des Einschubfaches elektrisch-galvanisch verbindet.

7. Schaltschrank nach Anspruch 6, dadurch gekennzeichnet, daß das Federelement (45) annähernd V-förmig ausgebildet ist und mit seiner Spitze (46) aus der oberen Fläche der Schiene (31) herausragt und in einer Nut (18) am Bodenteil (10) verrastend eingreift.

8. Schaltschrank nach einem der vorigen Ansprüche, dadurch gekennzeichnet, daß die Antriebsvorrichtung an einer mit der Frontwand (100) fest verbundenen Haltevorrichtung (Bügel 56) gelagert ist.

9. Schaltschrank nach einem der vorigen Ansprüche, dadurch gekennzeichnet, daß das erste Getriebe eine mit der ersten Schaltwelle (72) fest verbundene Antriebsscheibe (60), einen exzentrisch an der Antriebsscheibe gelenkig angebrachten Übertragungshebel (64), eine mit diesem gelenkig verbundene Lasche (69) und die mit dem freien Ende der Lasche fest verbundene Verriegelungsrolle (70) aufweist, wobei die Drehachse (61) der Antriebsscheibe (60), eine Achse (65) zur Führung des Übertragunshebels (64) und die Drehachse der Verriegelungsrolle (70) ortsfest sind.

10. Schaltschrank nach Anspruch 9, dadurch gekennzeichnet, daß der Übertragungshebel (64) ein die Achse (65) aufnehmendes Langloch (66) und ein die Achse des Verbindungsgelenkes (68) von Übertragungshebel und Lasche (69) aufnehmendes weiteres Langloch (67) aufweist, und daß die Mittelachsen beider Langlöcher miteinander fluchten und durch den Anlenkpunkt (62) des Übertragungshebels an der Antriebsscheibe (60) verlaufen.

11. Schaltschrank nach einem der vorigen Ansprüche, dadurch gekennzeichnet, daß die Antriebsscheibe (60) mit Nuten (57) versehen ist und so als Rastscheibe dient, wobei die Rastfedern (58) mit den Nuten an der Rastscheibe zur Verrastung in Eingriff gelangen.

12. Schaltschrank nach einem der vorigen Ansprüche, dadurch gekennzeichnet, daß die Verriegelungsrolle (70) eine Nut (71) am Umfang aufweist, deren radiale Länge (L) der Breite (B) der Leiste (33) an der Schiene (31) entspricht, so daß die Verriegelungsrolle in einer mittleren Stellung frei entlang der Leiste verschiebbar ist, da die Nutkontur zur Gänze außerhalb der Leiste verläuft.

13. Schaltschrank nach einem der vorigen Ansprüche, dadurch gekennzeichnet, daß die Kupplung ein Kupplungsteil (82) umfaßt, das an einem Ende mit der zweiten Schaltwelle (91) formschlüssig und drehfest verbunden ist und am anderen Ende einen Schlitz (88) aufweist, in den die erste Schaltwelle (72) mit dem Stift (73) einrückbar ist.

14. Schaltschrank nach Anspruch 13, dadurch gekennzeichnet, daß die Kupplung zusätzlich eine Ringscheibe (77/78) aufweist, durch die das Kupplungsteil (82) mit den durch den Schlitz (88) gebildeten Fortsätzen hindurchgreift, daß die Ringscheibe einen quer verlaufenden, dem Schlitz (88) angepaßten Steg (79) besitzt, gegen den sich die Stirnfläche der ersten Schaltwelle (72) anlegt, und daß die Ringscheibe mittels einer Druckfeder (86) in Richtung Trennen der ersten Schaltwelle vom Kupplungsteil beaufschlagt ist, so daß bei entspannter Druckfeder die Kupplung getrennt ist.

15. Schaltschrank nach einem der vorigen Ansprüche, dadurch gekennzeichnet, daß die Rastscheibe für das Schaltgerät (110) die Ringscheibe (77, 78) ist, die an ihrem Umfang Nuten (94, 95) aufweist, in die eine Rastfeder (58) zur Verrastung eingreift.

16. Schaltschrank nach einem der vorigen Ansprüche, dadurch gekennzeichnet, daß das Schaltgerät (110) von einer Betätigungsanordnung betätigbar ist, die einen von der mit dem zweiten Kupplungsteil (82) verbundenen Schaltwelle (91) angetriebenen Schnappmechanismus aufweist, der an einer auf dem Bodenteil (10) des Einschubes aufschnappbaren Halterung (116) gehaltert ist.

17. Schaltschrank nach einem der vorigen Ansprüche, dadurch gekennzeichnet, daß sowohl für die Antriebsscheibe (60) als auch für die Ringscheibe (77, 78) ein gemeinsames Federelement (58) vorgesehen ist, das an der Haltevorrichtung (56) für die Antriebsvorrichtung festgelegt und mittels eines Schlitzes (92) in zwei Federabschnitte unterteilt ist, so daß beide Federabschnitte unabhängig voneinander einerseits mit der Antriebsscheibe und andererseits mit der Ringscheibe zur Verrastung in Eingriff gelangen.

18. Schaltschrank nach einem der vorigen Ansprüche, dadurch gekennzeichnet, daß zusätzlich ein Verriegelungsschloß vorgesehen ist, das den Übertragungshebel (64) in der Stellung festlegt, in der die Verriegelung die Stellung « Betriebsstellung » einnimmt.

19. Schaltschrank nach einem der vorigen Ansprüche, dadurch gekennzeichnet, daß an dem Einschub zusätzlich ein Schloß mit einer Schloßscheibe (130) drehbar angebracht ist, daß ferner eine Verriegelungsscheibe (134) vorgesehen ist, die mit einem an der Schloßscheibe (130) angebrachten Zapfen (132) in Eingriff steht, und daß an dem Übertragungshebel (64) eine Nase (141) angeformt ist, die mit einem an der Verriegelungsscheibe (134) angeformten Vorsprung (140) zusammenwirkt, dergestalt, daß sich der Vorsprung (140) im verschlossenen Zustand in der Bewegungsbahn der Nase (141) befindet.

## Claims

1. Electrical switchgear cabinet with at least one push-in unit compartment which is provided with a compartment base formed by a sheet-metal part and into which at least one push-in unit, guided in the push-in direction, can be guided which has a base part (10), side walls (102, 103), a front (100) and a rear wall (101) and is fitted at least with one switchgear unit to be actuated from the front wall, characterized in that a profiled rail (31), secured on the compartment base, is provided for guiding the push-in unit, that the base part (10), on the surface facing the rail, is provided with a profile (18) adapted to the profile of the rail and interacting with it for guidance, and that a drive device for actuating the switchgear unit is attached to the push-in unit, which drive device is additionally used for locking the push-in unit in at least one position by securing the push-in unit on the rail.

2. Switchgear cabinet according to Claim 1, characterized in that the drive device, which can be actuated by a rotatable switching knob (89), comprises a first drive mechanism for actuating a locking roller (70) which can be snapped into a recess on the rail (31) and a further second drive mechanism, which can be coupled to the first drive mechanism, for actuating the switchgear unit (110).

3. Switchgear cabinet according to Claim 2, characterized in that, as a coupling, a groove-spring arrangement is provided which is pressed apart by compression springs (86) and is uncoupled in this position, but can be fitted together by pressure on the switching knob (89) and can thus be coupled, with the coupling being constantly coupled in a predetermined rotary range of the switching knob.

4. Switchgear cabinet according to Claim 3, characterized in that switching shafts (72, 91) which can be coupled by the coupling are connected on both sides to the coupling and are guided in a wall (74) on the push-in unit, and that a radially projecting pin (73) is arranged on the first switching shaft (72) allocated to the first drive mechanism, which pin (73), in the uncoupled condition, is held in front of the wall (74) and in the coupled condition, after the pin passes through the wall (74), is held behind this wall (74), and in the latter position the coupling is locked in the coupled condition.

5. Switchgear cabinet according to one of the preceding claims, characterized in that a catch disc (60 ; coupling piece 77) is in each case connected directly or indirectly to the first and second switching shaft (72, 91), which catch discs are held in certain positions by means of catch springs (58).

6. Switchgear installation according to one of the preceding claims, characterized in that the rail (31) is formed from plastic and is securely hooked on the base plate (30) by means of hooks (39, 42), and that a spring element (45) is arranged in the rail, at the rear end as viewed in the push-in direction, which spring element (45) electrically connects the base part (10) of the push-in unit to the base plate (30) of the push-in unit compartment.

7. Switchgear cabinet according to Claim 6, characterized in that the spring element (45) is of approximately V-shaped configuration and projects with its tip (46) from the upper surface of the rail (31) and engages in interlocking manner in a groove (18) on the base part (10).

8. Switchgear cabinet according to one of the preceding claims, characterized in that the drive device is mounted on a retaining device (stirrup 56) firmly connected to the front wall (100).

9. Switchgear cabinet according to one of the preceding claims, characterized in that the first drive mechanism has a drive disc (60), firmly connected to the first switching shaft (72), a transmission lever (64), attached eccentrically in articulated manner on the drive disc a link (69), connected in articulated manner to this transmission lever (64), and the locking roller (70) firmly connected to the free end of the link, with the rotational axis (61) of the drive disc (60), an axis (65) for guiding the transmission lever (64) and the rotational axis of the locking roller (70) being fixed.

10. Switchgear cabinet according to Claim 9, characterized in that the transmission lever (64) has a slotted hole (66) accommodating the axis (65), and a further slotted hole (67) accommodating the axis of the connecting articulation (68) of the transmission lever and the link (69), and that the centre axes of both slotted holes are in alignment with one another and run through the articulation point (62) of the transmission lever at the drive disc (60).

11. Switchgear cabinet according to one of the preceding claims, characterized in that the drive disc (60) is provided with grooves (57) and thus acts as a catch disc, with the catch springs (58) coming into engagement with the grooves on the catch disc for interlocking.

12. Switchgear cabinet according to one of the preceding claims, characterized in that the locking roller (70) has a groove (71) on the periphery, the radial length (L) of which corresponds to the width (B) of the strip (33) on the rail (31), so that the locking roller, in a centre position, is freely displaceable along the strip, since the groove contour runs completely outside the strip.

13. Switchgear cabinet according to one of the preceding claims, characterized in that the coupling comprises a coupling part (82) which, at one end, is positively and non-rotationally connected to the second switching shaft (91) and at the other end has a slot (88) with which the first switching shaft (72) with the pin (73) can mesh.

14. Switchgear cabinet according to Claim 13, characterized in that the coupling additionally has an annular disc (77, 78) through which the coupling part (82) passes with the extensions formed by the slot (88), that the annular disc has a transversely running web (79) which is adapted to the slot (88) and against which the end face of the first switching shaft (72) abuts, and that the annular disc is acted upon by means of a compression spring (86) in the direction separating the first switching shaft from the coupling part, so that the coupling is separated when the compression spring is relieved.

15. Switchgear cabinet according to one of the preceding claims, characterized in that the annular disc for the switchgear unit (110) is the annular disc (77, 78) which has grooves (94, 95) on its periphery into which a catch spring (58) engages for interlocking.

16. Switchgear cabinet according to one of the preceding claims, characterized in that the switchgear unit (110) can be actuated by an actuating arrangement which has a snap mechanism which is driven by the switching shaft (91) connected to the second coupling part (82) and is held on a holder (116) which can be snapped on the base part (10) of the push-in unit.

17. Switchgear cabinet according to one of the preceding claims, characterized in that, for both the drive disc (60) and the annular disc (77, 78), a common spring element (58) is provided which is secured on the holding device (56) for the drive device and is subdivided into two spring sections by means of a slot (92) so that both spring sections, independently of one another, for interlocking, come into engagement on the one side with the drive disc and on the other side with the annular disc.

18. Switchgear cabinet according to one of the preceding claims, characterized in that a locking fastener is additionally provided which secures the transmission lever (64) in the position in which the locking arrangement assumes the position « operating position ».

19. Switchgear cabinet according to one of the preceding claims, characterized in that a fastener with a fastener plate (130) is additionally rotatably attached to the push-in unit, that, moreover, a locking plate (134) is provided which is in engagement with a pin (132) attached to the fastener plate (130), and that integrally formed on the transmission lever (64) is a nose (141) which interacts in such a way with a projection (140), integrally formed on the locking plate (134), that the projection (140), in the closed condition, is located in the path of motion of the nose (141).

**Revendications**

1. Armoire de distribution électrique comprenant au moins un compartiment qui est muni d'un fond formé par une pièce de tôle et dans lequel on peut engager, guidé dans le sens de son engagement, au moins un tiroir comprenant un élément de fond (10), des parois latérales (102, 103), une paroi frontale (100) et une paroi arrière (101) et au moins équipé d'un appareil de commande à actionner à partir de la paroi frontale, caractérisée par le fait que, pour le guidage du tiroir, on prévoit un rail profilé (31) fixé sur le fond du compartiment, que l'élément de fond (10), sur sa surface tournée du côté du rail, est pourvu d'un profilé (18) adapté au profil du rail et coopérant avec celui-ci pour le guidage et que sur le tiroir est monté un dispositif d'entraînement pour l'actionnement de l'appareil de commande (110) et servant aussi en plus à verrouiller le tiroir dans au moins une position par immobilisation du tiroir sur le rail.

2. Armoire de distribution selon la revendication 1, caractérisée par le fait que le dispositif d'entraînement, actionné par un bouton de manœuvre rotatif (89), comprend un premier mécanisme pour l'actionnement d'un galet de verrouillage (70) encliquetable dans un évidement du rail (31) et un autre second mécanisme, pouvant être accouplé au premier mécanisme, pour l'actionnement de l'appareil de commande (110).

3. Armoire de distribution selon la revendication 2, caractérisée par le fait que, comme accouplement, on envisage un dispositif à rainures et à languettes qui est écarté par des ressorts de pression (86) et désaccouplé dans cette position, mais qui peut être réuni et ainsi accouplé par pression exercée sur le bouton de manœuvre (89), l'accouplement restant maintenu en permanence dans une plage de rotation déterminée du bouton de manœuvre.

4. Armoire de distribution selon la revendication 3, caractérisée par le fait que des arbres de commande (72, 91), qui sont guidés dans une paroi (74) du tiroir, sont raccordés des deux côtés à l'accouplement et peuvent être accouplés par celui-ci et que sur le premier arbre de commande (72), associé au premier mécanisme, est disposée une goupille (73) qui, faisant saillie radialement, est maintenue devant la paroi (74) à l'état désaccouplé et derrière celle-ci à l'état accouplé après passage de la goupille à travers ladite paroi (74) et, à cette dernière position, verrouille l'accouplement à l'état accouplé.

5. Armoire de distribution selon l'une des revendications précédentes, caractérisée par le fait qu'au premier et au second arbre de commande (72, 91) est respectivement raccordé, directement ou indirectement, un disque à crans (60 ; pièce d'accouplement 77) qui sont maintenus dans des positions déterminées au moyen de ressorts d'encliquetage (58).

6. Installation de distribution selon l'une des revendications précédentes, caractérisée par le fait que le rail (31) est réalisé en matière synthétique et est fixé à la tôle de fond (30) au moyen de crochets (39, 42), et que dans le rail, à l'extrémité arrière vue dans le sens de l'engagement, est disposé un élément à ressort (45) qui relie électriquement l'élément de fond (10) du tiroir à la tôle de fond (30) du compartiment du tiroir.

7. Armoire de distribution selon la revendication 6, caractérisée par le fait que l'élément à ressort (45) est réalisé approximativement en forme de V et, par son sommet (46), fait saillie en dehors de la surface supérieure du rail (31) et s'engage en s'encliquetant dans une rainure (18) de l'élément de fond (10).

8. Armoire de distribution selon l'une des revendications précédentes, caractérisée par le fait que le dispositif d'entraînement est monté sur un dispositif de retenue (étrier 56) solidaire de la paroi frontale (100).

9. Armoire de distribution selon l'une des revendications précédentes, caractérisée par le fait que le premier mécanisme comporte un disque d'entraînement (60) solidaire du premier arbre de commande (72), un levier de transmission (64) monté excentriquement et de façon articulée sur le disque d'entraînement, une barre de liaison (69) s'articulant sur ledit levier et le galet de verrouillage (70) assujetti à l'extrémité libre de la barre de liaison, l'axe de rotation (61) du disque d'entraînement (60), un axe (65) pour le guidage du levier de transmission (64) et l'axe de rotation du galet de verrouillage (70) étant à position fixe.

10. Armoire de distribution selon la revendication 9, caractérisée par le fait que le levier de transmission (64) comporte un trou oblong (66) recevant l'axe (65) et un autre trou oblong (67) recevant l'axe de l'articulation de raccordement (68) de l'arbre de transmission et de la barre de liaison (69), et que les axes médians des deux trous oblongs sont dans l'alignement l'un de l'autre et passent par le point d'articulation (62) du levier de transmission sur le disque d'entraînement (60).

11. Armoire de distribution selon l'une des revendications précédentes, caractérisée par le fait que le disque d'entraînement (60) est muni d'encoches (57) et sert ainsi de disque à crans, les ressorts d'encliquetage (58) engrenant dans les encoches du disque à crans pour assurer l'encliquetage.

12. Armoire de distribution selon l'une des revendications précédentes, caractérisée par le fait que le galet de verrouillage (70) comporte sur sa périphérie une rainure (71) dont la longueur radiale (L) correspond à la largeur (B) de la nervure (33) du rail (31), de sorte que le galet de verrouillage, dans une position médiane, peut se déplacer librement le long de la nervure, attendu que le contour de la rainure se trouve entièrement en dehors de la nervure.

13. Armoire de distribution selon l'une des revendications précédentes, caractérisée par le fait que l'accouplement comporte un élément 82 qui, à une extrémité, est raccordé par emboîtement et solidaire en rotation au second arbre de commande (91) et, à l'autre extrémité, comporte une fente (88) dans laquelle peut s'engager le premier arbre de commande (72) muni de la goupille (73).

14. Armoire de distribution selon la revendication 13, caractérisée par le fait que l'accouplement comprend en plus un disque annulaire (77, 78) à travers lequel l'élément (82) passe avec ses appendices formés par la fente (88), que le disque annulaire comporte une entretoise (79) qui est disposée transversalement et adaptée à la fente (88) et contre laquelle vient s'appliquer la surface frontale du premier arbre de commande (72) et que le disque annulaire est soumis à l'action d'un ressort de pression (86) agissant dans le sens de la séparation entre le premier arbre de commande et l'élément d'accouplement de sorte que l'accouplement est séparé à l'état détendu du ressort de pression.

15. Armoire de distribution selon l'une des revendications précédentes, caractérisée par le fait que le disque à crans pour l'appareil de commande (110) est le disque annulaire (77, 78) qui comporte sur sa périphérie des encoches (94, 95) dans lesquelles engrène un ressort d'encliquetage (58).

16. Armoire de distribution selon l'une des revendications précédentes, caractérisée par le fait que l'appareil de commande (110) est manœuvré par un organe d'actionnement lequel comporte un mécanisme à déclic qui est entraîné par l'arbre de commande (91) raccordé au second élément d'accouplement (82) et qui est fixé sur un support (116) pouvant s'encliqueter sur l'élément de fond (10) du tiroir.

17. Armoire de distribution selon l'une des revendications précédentes, caractérisée par le fait qu'aussi bien pour le disque d'entraînement (60) que pour le disque annulaire (77, 78), il est prévu un élément à ressort commun (58) qui est fixé sur le dispositif de retenue (56) pour le dispositif de commande et qui est divisé en deux sections par une fente (92) si bien que les deux sections peuvent s'encliqueter indépendamment l'une de l'autre, d'une part, dans le disque d'entraînement et, d'autre part, dans le disque annulaire.

18. Armoire de distribution selon l'une des revendications précédentes, caractérisée par le fait qu'il est prévu en plus un verrou de blocage qui retient le levier de transmission (64) à la position dans laquelle le verrouillage est à la position « position de fonctionnement ».

19. Armoire de distribution selon l'une des revendications précédentes, caractérisée par le fait qu'un verrou muni d'un plateau de blocage (130) est en plus monté mobile en rotation sur le tiroir, qu'il est, en outre, prévu une plaque de verrouillage (134) qui engrène avec un téton (132) placé sur le plateau de blocage (130) et que sur le levier de transmission (64) est façonné d'une seule pièce un talon (141) qui coopère avec une saillie (140) façonnée d'une seule pièce sur la plaque de verrouillage (134), en ce sens que la saillie (140) à l'état verrouillé se trouve dans la trajectoire du talon (141).

Fig 1

Fig. 2

31 32 33 34 35 36 37

B

2

Fig. 3

0 109 555

I

89a

89

0

Ts                    Tr

↓ ↓

I

0

Ts                    Tr

↓ ↓  89a

I

0

Ts                    Tr

↓ ↓

66

64

67

68

69

70

L

71

Fig. 4

Fig. 5

Fig. 6

Fig. 7

Fig. 8

Fig. 9

Fig. 10

0 109 555

Fig. 11

0 109 555

Fig. 12

Fig. 13

0 109 555

Fig. 14

0 109 555